Europäisches Patentamt

European Patent Office

Office européen des brevets

(19)

(11) **EP 1 369 951 A1**

## (12) EUROPEAN PATENT APPLICATION
published in accordance with Art. 158(3) EPC

(43) Date of publication:
**10.12.2003 Bulletin 2003/50**

(21) Application number: **02705176.2**

(22) Date of filing: **14.03.2002**

(51) Int Cl.7: **H01M 10/40**, H01M 4/58,
H01M 4/38, H01M 4/02

(86) International application number:
**PCT/JP02/02409**

(87) International publication number:
**WO 02/073731 (19.09.2002 Gazette 2002/38)**

(84) Designated Contracting States:
**AT BE CH CY DE DK ES FI FR GB GR IE IT LI LU
MC NL PT SE TR**

(30) Priority: **14.03.2001 JP 2001073058**

(71) Applicant: **Sony Corporation
Tokyo 141-0001 (JP)**

(72) Inventors:
• **FUJITA, Shigeru, c/o Sony Corporation
Tokyo 141-0001 (JP)**

• **AKASHI, Hiroyuki, c/o Sony Corporation
Tokyo 141-0001 (JP)**
• **ADACHI, Momoe, c/o Sony Corporation
Tokyo 141-0001 (JP)**
• **SHIBAMOTO, Gorou, c/o Sony Corporation
Tokyo 141-0001 (JP)**

(74) Representative: **Müller, Frithjof E., Dipl.-Ing.
Müller Hoffmann & Partner
Patentanwälte
Innere Wiener Strasse 17
81667 München (DE)**

(54) **BATTERY**

(57)     Provided is a battery capable of improving the chemical stability of an electrolyte and characteristics. The battery comprises a spirally wound electrode body (20) including a strip-shaped cathode (21) and a strip-shaped anode (22) spirally wound with a separator (23) in between. During charge, lithium metal is precipitated on the anode (22), so the capacity of the anode (22) is represented by the sum of a capacity component by insertion and extraction of lithium and a capacity component by precipitation and dissolution of the lithium metal. The separator (23) is impregnated with an electrolyte solution including an electrolyte salt. The electrolyte salt includes a first lithium salt $LiN(C_nF_{2n+1}SO_2)$ $(C_mF_{2m+1}SO_2)$ and a second lithium salt such as $LiPF_6$ or the like. Thereby, the chemical stability of the electrolyte solution can be improved, and a side reaction can be inhibited, so charge-discharge cycle characteristics can be improved.

FIG. 1

EP 1 369 951 A1

**Description**

TECHNICAL FIELD

The present invention relates to a battery comprising a cathode, an anode and an electrolyte, and more specifically a battery in which the capacity of the anode is represented by the sum of a capacity component by insertion and extraction of light metal and a capacity component by precipitation and dissolution of the light metal.

BACKGROUND ART

In recent years, portable electronic devices typified by camera/VTR (video tape recorder) combination systems, cellular phones or laptop computers have come into widespread, and a reduction in size and weight of the devices and an increase in continuous driving time of the devices have been strongly required. Accordingly, as portable power sources for the electronic devices, secondary batteries with a higher capacity and a higher energy density have been in increasing demand.

As the secondary batteries which can obtain a higher energy density, for example, a lithium-ion secondary battery using a material capable of inserting and extracting lithium such as a carbon material or the like for the anode, or a lithium secondary battery using lithium metal for the anode is cited. Specifically, in the lithium secondary battery, a theoretical electrochemical equivalent of the lithium metal is as large as 2054 mAh/cm$^3$, which is 2.5 times larger than that of a graphite material used in the lithium-ion secondary battery, so it is expected that the lithium secondary battery can obtain a much higher energy density than the lithium-ion secondary battery. A large number of researchers or the like have been conducting research and development aimed at putting the lithium secondary battery to practical use (for example, Lithium Batteries edited by Jean-Paul Gabano, Academic Press (1983)).

However, the lithium secondary battery has a problem that when a charge-discharge cycle is repeated, a large decline in its discharge capacity occurs, so it is difficult to put the lithium secondary battery to practical use. The decline in the capacity occurs because the lithium secondary battery uses a precipitation/dissolution reaction of the lithium metal in the anode. In accordance with charge and discharge, the volume of the anode largely increases or decreases by the amount of the capacity corresponding to lithium ions transferred between the cathode and the anode, so the volume of the anode is largely changed, thereby it is difficult for a dissolution reaction and a recrystallization reaction of a lithium metal crystal to reversibly proceed. Further, the higher energy density the lithium secondary battery achieves, the more largely the volume of the anode is changed, and the more pronouncedly the capacity declines.

Therefore, the inventors of the invention have developed a novel secondary battery in which the capacity of the anode is represented by the sum of a capacity component by insertion and extraction of lithium and a capacity component by precipitation and dissolution of lithium. The secondary battery uses a carbon material capable of inserting and extracting lithium for the anode, and lithium is precipitated on a surface of the carbon material during charge. The secondary battery holds promise of improving charge-discharge cycle characteristics while achieving a higher energy density. However, in order to put the secondary battery to practical use, it is required to achieve a further improvement in the characteristics and higher stability. For this purpose, research and development of not only electrode materials but also electrolytes are absolutely necessary. More specifically, when a side reaction between an electrolyte and an electrode occurs, and a side reaction product is deposited on a surface of the electrode, an internal resistance of the battery increases, thereby the charge-discharge cycle characteristics pronouncedly decline. In short, chemical stability of the electrolyte is a very important issue.

In view of the foregoing, it is an object of the invention to provide a battery capable of improving chemical stability of an electrolyte and characteristics.

DISCLOSURE OF THE INVENTION

A battery according to the invention comprises a cathode, an anode and an electrolyte, wherein the capacity of the anode is represented by the sum of a capacity component by insertion and extraction of light metal and a capacity component by precipitation and dissolution of the light metal, and the electrolyte contains an electrolyte salt including one or more kinds of light metal salt represented by Chemical Formula 1 and one or more kinds of light metal salt except for the light metal salt represented by Chemical Formula 1.

(Chemical Formula 1)

$$MN(C_nF_{2n+1}SO_2)(C_mF_{2m+1}SO_2)$$

(where M represents light metal, N represents nitrogen, and each of n and m is an integer of 1 or greater.)

In the battery according to the invention, the electrolyte includes one or more kinds of light metal salt represented by Chemical Formula 1 and one or more kinds of light metal salt except for the light metal salt represented by Chemical Formula 1, so chemical stability of the electrolyte can be improved, so, for example, a side reaction between the anode and the electrolyte can be inhibited.

Other and further objects, features and advantages of the invention will appear more fully from the following description.

BRIEF DESCRIPTION OF THE DRAWINGS

FIG. 1 is a sectional view of a secondary battery according to an embodiment of the invention; and
FIG. 2 is an enlarged sectional view of a part of a spirally wound electrode body shown in FIG. 1.

BEST MODE FOR CARRYING OUT THE INVENTION

Preferred embodiments of the invention will be described in more detail below referring to the accompanying drawings.

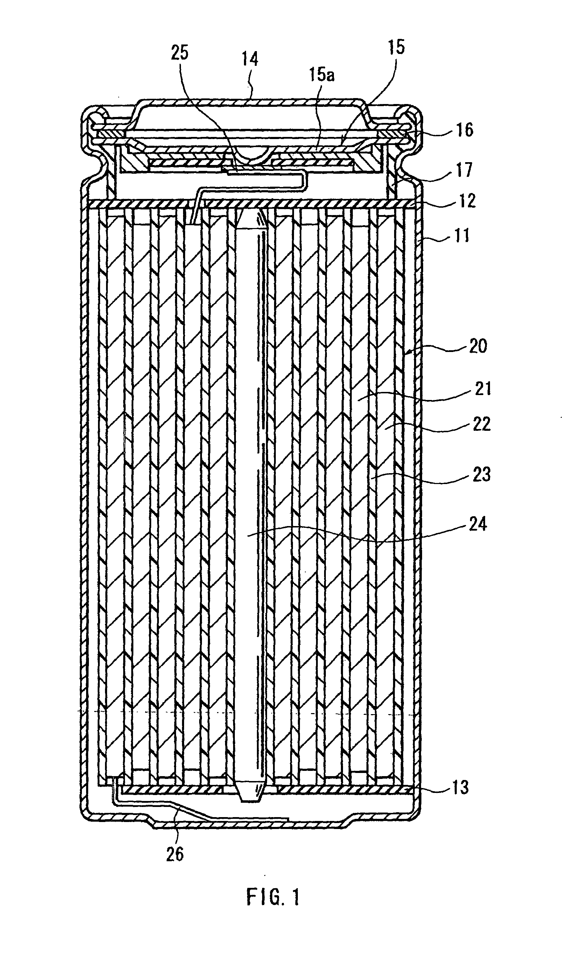

FIG. 1 shows a sectional view of a secondary battery according to an embodiment of the invention. The secondary battery is a so-called jelly roll type, and comprises a spirally wound electrode body 20 including a strip-shaped cathode 21 and a strip-shaped anode 22 spirally wound with a separator 23 in between in a substantially hollow cylindrical-shaped battery can 11. The battery can 11 is made of, for example, nickel (Ni)-plated iron. An end portion of the battery can 11 is closed, and the other end portion thereof is opened. In the battery can 11, a pair of insulating plates 12 and 13 are disposed so that the spirally wound electrode body 20 is sandwiched therebetween in a direction perpendicular to a spirally wound peripheral surface.

In the opened end portion of the battery can 11, a battery cover 14 and, a safety valve mechanism 15 and a positive temperature coefficient device (PTC device) 16 disposed inside the battery cover 14 are mounted through caulking by a gasket 17, and the interior of the battery can 11 is sealed. The battery cover 14 is made of, for example, the same material as that of the battery can 11. The safety valve mechanism 15 is electrically connected to the battery cover 14 through the PTC device 16, and when internal pressure in the battery increases to higher than a certain extent due to an internal short circuit or external application of heat, a disk plate 15a is flipped so as to disconnect the electrical connection between the battery cover 14 and the spirally wound electrode body 20. When a temperature rises, the PTC device 16 limits a current by an increased resistance, thereby resulting in preventing abnormal heat generation by a large current. The PTC device 16 is made of, for example, barium titanate semiconductor ceramic. The gasket 17 is made of, for example, an insulating material, and its surface is coated with asphalt.

The spirally wound electrode body 20 is wound around, for example, a center pin 24. A cathode lead 25 made of aluminum (Al) or the like is connected to the cathode 21 of the spirally wound electrode body 20, and an anode lead 26 made of nickel or the like is connected to the anode 22. The cathode lead 25 is welded to the safety valve mechanism 15 so as to be electrically connected to the battery cover 14, and the anode lead 26 is welded to the battery can 11 so as to be electrically connected to the battery can 11.

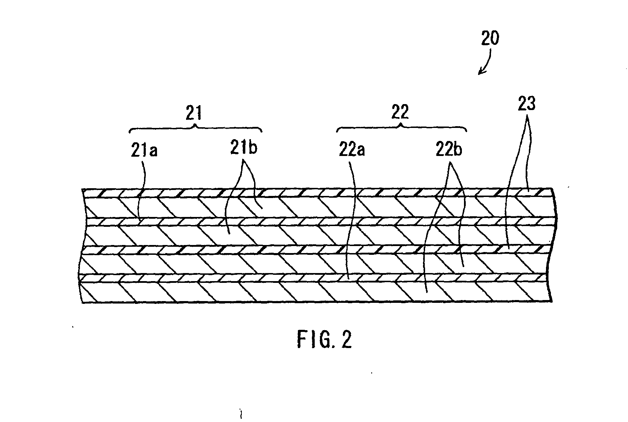

FIG. 2 shows an enlarged view of a part of the spirally wound electrode body 20 shown in FIG. 1. The cathode 21 has, for example, a structure in which a cathode mixed layer 21b is disposed on both sides of a cathode current collector 21a having a pair of surfaces facing each other. In addition, the cathode mixed layer 21b may be disposed on only one side of the cathode current collector 21a, although it is not shown. The cathode current collector 21a is made of, for example, metal foil such as aluminum foil, nickel foil, stainless foil or the like with a thickness of approximately from 5 $\mu$m to 50 $\mu$m. The cathode mixed layer 21b has, for example, a thickness of 80 $\mu$m to 250 $\mu$m, and includes a cathode material capable of inserting and extracting lithium which is light metal. Further, when the cathode mixed layer 21b is disposed on both sides of the cathode current collector 21a, the thickness of the cathode mixed layer 21b means the total thickness thereof.

As the cathode material capable of inserting and extracting lithium, for example, a lithium-containing compound such as a lithium oxide, a lithium sulfide, a intercalation compound including lithium or the like is adequate, and a mixture including two or more kind selected from them may be used. More specifically, in order to achieve a higher energy density, a lithium complex oxide or an intercalation compound including lithium represented by a general formula $Li_xMaO_2$ is preferable. In the formula, as Ma, one or more kinds of transition metals, more specifically at least one kind selected from the group consisting of cobalt (Co), nickel, manganese (Mn), iron (Fe), aluminum, vanadium (V) and titanium (Ti) is preferable. The value of x depends upon a charge-discharge state of the battery, and is generally within a range of $0.05 \leqq x \leqq 1.10$. In addition, $LiMn_2O_4$ having a spinel crystal structure, $LiFePO_4$ having an olivine crystal structure or the like is preferable, because a higher energy density can be obtained.

Further, such a cathode material is prepared through the following steps. For example, after a carbonate, a nitrate, an oxide or a hydroxide including lithium, and a carbonate, a nitrate, an oxide or a hydroxide including a transition metal are mixed so as to have a desired composition, and the mixture is pulverized, the pulverized mixture is fired at a temperature ranging from 600°C to 1000°C in an oxygen atmosphere, thereby the cathode material is prepared.

The cathode mixed layer 21b includes, for example, an electronic conductor, and may further include a binder, if necessary. As the electronic conductor, for example, a carbon material such as graphite, carbon black, ketjen black or the like is cited, and one kind or a mixture of two or more kinds selected from them is used. In addition to the carbon material, any electrically conductive material such as a metal material, a conductive high molecular weight material or the like may be used. As the binder, for example, synthetic rubber such as styrene butadiene rubber, fluorine rubber, ethylene propylene diene rubber or the like, or a high molecular weight material such as polyvinylidene fluoride or the like is cited, and one kind or a mixture including two or more kinds selected from them is used. For example, as shown in FIG. 1, when the cathode 21 and the anode 22 are spirally wound, the styrene butadiene rubber, the fluorine rubber or the like having high elasticity is preferably used as the binder.

The anode 22 has, for example, a structure in which an anode mixed layer 22b is disposed on both sides of an anode current collector 22a having a pair of surfaces facing each other. The anode mixed layer 22b may be disposed on only one side of the anode current collector 22a, although it is not shown. The anode current collector 22a is made of, for example, metal foil having excellent electrochemical stability, electrical conductivity and mechanical strength such as copper (Cu) foil, nickel foil, stainless foil or the like. More specifically, the copper foil is the most preferable because the copper foil has high electrical conductivity. The anode current collector 22a preferably has a thickness of, for example, approximately 6 μm to 40 μm. When the thickness of the anode current collector 22a is thinner than 6 μm, the mechanical strength declines, so the anode current collector 22a is easily broken during a manufacturing process, thereby production efficiency declines. On the other hand, when.it is thicker than 40 μm, a volume ratio of the anode current collector 22a in the battery becomes larger than necessary, so it is difficult to increase the energy density.

The anode mixed layer 22b includes one kind or two or more kinds selected from anode materials capable of inserting and extracting lithium which is light metal, and may further include, for example, the same binder as that included in the cathode mixed layer 21b, if necessary. The anode mixed layer 22b has a thickness of, for example, 80 μm to 250 μm. When the anode mixed layer 22b is disposed on both sides of the anode current collector 22a, the thickness of the anode mixed layer 22b means the total thickness thereof.

In this description, insertion and extraction of light metal mean that light metal ions are electrochemically inserted and extracted without losing their ionicity. It includes not only a case where inserted lithium metal exists in a perfect ion state but also a case where the inserted lithium metal exists in an imperfect ion state. As these cases, for example, insertion by electrochemical intercalation of light metal ions into graphite is cited. Further, insertion of the light metal by forming an intermetallic compound or an alloy can be cited.

As the anode material capable of inserting and extracting lithium, for example, a carbon material such as graphite, non-graphitizable carbon, graphitizing carbon or the like is cited. These carbon materials are preferable, because a change in the crystalline structure which occurs during charge and discharge is extremely small, so a higher charge-discharge capacity and superior charge-discharge cycle characteristics can be obtained. Further, graphite is more preferable, because a larger electrochemical equivalent and a higher energy density can be obtained.

For example, graphite with a true density of 2.10 g/cm$^3$ or over is preferable, and graphite with a true density of 2.18 g/cm$^3$ or over is more preferable. In order to obtain such a true density, a c-axis crystalline thickness of a (002) plane is required to be 14.0 nm or over. Moreover, the spacing of (002) planes is preferably less than 0.340 nm, and more preferably within a range from 0.335 nm to 0.337 nm.

The graphite may be natural graphite or artificial graphite. The artificial graphite can be obtained through the following steps, for example. An organic material is carbonized, and high-temperature heat treatment is carried out on the carbonized organic material, then the organic material is pulverized and classified so as to obtain the artificial graphite. The high-temperature treatment is carried out in the following steps. For example, the organic material is carbonized at 300°C to 700°C in an airflow of an inert gas such as nitrogen ($N_2$) or the like, if necessary, and then the temperature rises to 900°C to 1500°C at a rate of 1°C to 100°C per minute, and the temperature is kept for 0 to 30 hours to pre-fire the organic material, then the organic material is heated to 2000°C or over, preferably 2500°C or over, and the temperature is kept for an adequate time.

As the organic material as a starting material, coal or pitch can be used. As the pitch, for example, tars which can be obtained by thermally cracking coal tar, ethylene bottom oil, crude oil or the like at high temperature, a material which can be obtained by distillation (vacuum distillation, atmospheric distillation or steam distillation), thermal polycondensation, extraction, and chemical polycondensation of asphalt or the like, a material produced during destructive distillation of wood, a polyvinyl chloride resin, polyvinyl acetate, polyvinyl butyrate, or a 3,5-dimethylphenol resin is cited. These coals and pitches exist in a liquid state around at 400°C at the highest during carbonization, and by keeping the coal and pitches at the temperature, aromatic rings are condensed and polycycled, so the aromatic rings is aligned in a stacking arrangement. After that, a solid carbon precursor, that is, semi-coke is formed at approximately 500°C or over (liquid-phase carbonization process).

Moreover, as the organic material, a condensed polycyclic hydrocarbon compound such as naphthalene, phenanthrene, anthracene, triphenylene, pyrene, perylene, pentaphene, pentacene or the like, a derivative thereof (for example, carboxylic acid of the above compound, carboxylic acid anhydride, carboxylic acid imide), or a mixture thereof can be used. Further, a condensed heterocyclic compound such as acenaphthylene, indole, isoindole, quinoline, isoquinoline, quinoxaline, phthalazine, carbazole, acridine, phenazine, phenanthridine or the like, a derivative thereof, or a mixture thereof can be used.

In addition, pulverization may be carried out before or after carbonization and calcination, or during a rise in temperature before graphitization. In these cases, the material in powder form is heated for graphitization in the end. However, in order to obtain graphite powders with a higher bulk density and a higher fracture strength, it is preferable that after the material is molded, the molded material is heated, then the graphitized molded body is pulverized and classified.

For example, in order to form the graphitized molded body, after coke as a filler and binder pitch as a molding agent or a sintering agent are mixed and molded, a firing step in which the molded body is heated at a low temperature of 1000°C or less and a step of impregnating the fired body with the molten binder pitch are repeated several times, and then the body is heated at high temperature. The binder pitch with which the fired body is impregnated is carbonized by the above heat treatment process so as to be graphitized. In this case, the filler (coke) and the binder pitch are used as the materials, so they are graphitized as a polycrystal, and sulfur or nitrogen included in the materials is generated as a gas during the heat treatment, thereby minute pores are formed in a path of the gas. Therefore, there are some advantages that insertion and extraction of lithium proceed more easily by the pores, and industrial processing efficiency is higher. Further, as the material of the molded body, a filler having moldability and sinterability may be used. In this case, the binder pitch is not required.

The non-graphitizable carbon having the spacing of the (002) planes of 0.37 nm or over and a true density of less than 1.70 $g/cm^3$, and not showing an exothermic peak at 700°C or over in a differential thermal analysis (DTA) in air is preferable.

Such non-graphitizable carbon can be obtained, for example, through heating the organic material around at 1200°C, and pulverizing and classifying the material. Heat treatment is carried out through the following steps. After, if necessary, the material is carbonized at 300°C to 700°C (solid phase carbonization process), a temperature rises to 900°C to 1300°C at a rate of 1°C to 100°C per minute, and the temperature is kept for 0 to 30 hours. Pulverization may be carried out before or after carbonization or during a rise in temperature.

As the organic material as a starting material, for example, a polymer or a copolymer of furfuryl alcohol or furfural, or a furan resin which is a copolymer including macromolecules thereof and any other resin can be used. Moreover, a conjugated resin such as a phenolic resin, an acrylic resin, a vinyl halide resin, a polyimide resin, a polyamide imide resin, a polyamide resin, polyacetylene, poly(para-phenylene) or the like, cellulose or a derivative thereof, coffee beans, bamboos, crustacea including chitosan, kinds of bio-cellulose using bacteria can be used. Further, a compound in which a functional group including oxygen (O) is introduced into petroleum pitch with, for example, a ratio H/C of the number of atoms between hydrogen (H) and carbon (C) of from 0.6 to 0.8 (that is, an oxygen cross-linked compound) can be used.

The percentage of the oxygen content in the compound is preferably 3% or over, and more preferably 5% or over (refer to Japanese Unexamined Patent Application Publication No. Hei 3-252053). The percentage of the oxygen content has an influence upon the crystalline structure of a carbon material, and when the percentage is the above value or over, the physical properties of the non-graphitizable carbon can be improved, thereby the capacity of the anode 22 can be improved. Moreover, the petroleum pitch can be obtained, for example, by distillation (vacuum distillation, atmospheric distillation or steam distillation), thermal polycondensation, extraction, and chemical polycondensation of tars obtained through thermally cracking coal tar, ethylene bottom oil or crude oil at high temperature, asphalt or the like. Further, as a method of forming an oxygen cross-link, for example, a wet method of reacting a solution such as nitric acid, sulfuric acid, hypochlorous acid, a mixture thereof or the like and petroleum pitch, a dry method of reacting an oxidizing gas such as air, oxygen or the like and petroleum pitch, or a method of reacting a solid reagent such as sulfur, ammonium nitrate, ammonium persulfate, ferric chloride or the like and petroleum pitch can be used.

In addition, the organic material as the starting material is not limited to them, and any other organic material which can become non-graphitizable carbon through the solid-phase carbonization by an oxygen bridging process or the like may be used.

As the non-graphitizable carbon, in addition to the non-graphitizable carbon formed of the above organic material as a starting material, a compound including phosphorus (P), oxygen and carbon as main components which is disclosed in Japanese Unexamined Patent Application Publication No. Hei 3-137010 is preferable, because the above-described parameters of physical properties are exhibited.

As the anode material capable of inserting and extracting lithium, a metal or a semiconductor capable of forming an alloy or a compound with lithium, or an alloy of the metal or the semiconductor, or a compound of the metal or the semiconductor is cited. They are preferable because a higher energy density can be obtained, and it is more preferable to use them with a carbon material, because a higher energy density and superior cycle characteristics can be obtained.

As such a metal or such a semiconductor, for example, tin (Sn), lead (Pb), aluminum, indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), hafnium (Hf), zirconium (Zr) and yttrium (Y) are cited. As an alloy or a compound thereof, for example, an alloy or a compound represented by a chemical formula $MI_sMII_tLi_u$ or a chemical formula $MI_pMIII_qMIV_r$ is cited. In these chemical formulas, MI represents at least one kind selected from metal elements and semiconductor elements which can form an alloy or a compound with lithium, MII represents at least one kind selected from metal elements and semiconductor elements except for lithium and MI, MIII represents at least one kind selected from nonmetal elements, and MIV represents at least one kind selected from metal elements and semiconductor elements except for MI. Further, the values of s, t, u, p, q and r are $s>0$, $t \geqq 0$, $u \geqq 0$, $p>0$, $q>0$ and $r \geqq 0$, respectively.

Among them, a metal element or a semiconductor element selected from Group 4B, or an alloy thereof or a compound thereof is preferable, and silicon or tin, or an alloy thereof or a compound thereof is more preferable. They may have a crystalline structure or an amorphous structure.

As specific examples of such an alloy or such a compound, LiAl, AlSb, CuMgSb, $SiB_4$, $SiB_6$, $Mg_2Si$, $Mg_2Sn$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $NbSi_2$, $TaSi_2$, $VSi_2$, $WSi_2$, $ZnSi_2$, SiC, $Si_3N_4$, $Si_2N_2O$, $SiO_y$ (0<v$\leqq$2), $SnO_w$ (0<w$\leqq$2), $SnSiO_3$, LiSiO, LiSnO or the like is cited.

Moreover, as the anode material capable of inserting and extracting lithium, other metal compounds or high molecular weight materials are cited. As the other metal compounds, an oxide such as iron oxide, ruthenium oxide, molybdenum oxide, or LiNs is cited, and as the high molecular weight materials, polyacetylene, polyaniline, polypyrrole or the like is cited.

Moreover, in the secondary battery, during charge, precipitation of lithium metal on the anode 22 begins at a point where an open circuit voltage (that is, battery voltage) is lower than an overcharge voltage. In other words, in a state where the open circuit voltage is lower than the overcharge voltage, the lithium metal is precipitated on the anode 22, so the capacity of the anode 22 can be presented by the sum of a capacity component by insertion and extraction of lithium and a capacity component by precipitation and dissolution of the lithium metal. Therefore, in the secondary battery, both of the anode material capable of inserting and extracting lithium and the lithium metal have a function as an anode active material, and the anode material capable of inserting and extracting lithium is a base material when the lithium metal is precipitated.

The overcharge voltage means a open circuit voltage when the battery is overcharged, and indicates, for example, a voltage higher than the open circuit voltage of a battery "fully charged" described in and defined by "Guideline for safety assessment of lithium secondary batteries" (SBA G1101) which is one of guidelines drawn up by Japan Storage Battery industries Incorporated (Battery Association of Japan). In other words, the overcharge voltage indicates a higher voltage than an open circuit voltage after charge by using a charging method used when a nominal capacity of each battery is determined, a standard charging method or a recommended charging method. More specifically, the secondary battery is fully charged, for example, at a open circuit voltage of 4.2 V, and the lithium metal is precipitated on a surface of the anode material capable of inserting and extracting lithium in a part of the range of the open circuit voltage of from 0 V to 4.2 V.

Thereby, in the secondary battery, a higher energy density can be obtained, and cycle characteristics and high-speed charge characteristics can be improved, because of the following reason. The secondary battery is equivalent to a conventional lithium secondary battery using lithium metal or a lithium alloy for the anode in a sense that the lithium metal is precipitated on the anode. However, in the secondary battery, the lithium metal is precipitated on the anode material capable of inserting and extracting lithium, thereby it is considered that the secondary battery has the following advantages.

Firstly, in the conventional lithium secondary battery, it is difficult to uniformly precipitate the lithium metal, which causes degradation in cycle characteristics, however, the anode material capable of inserting and extracting lithium generally has a large surface area, so in the secondary battery, the lithium metal can be uniformly precipitated. Secondly, in the conventional lithium secondary battery, a change in volume according to precipitation and dissolution of the lithium metal is large, which also causes degradation in the cycle characteristics, however, in the secondary battery, the lithium metal is precipitated in gaps between particles of the anode material capable of inserting and extracting lithium, so a change in volume is small. Thirdly, in the conventional lithium secondary battery, the larger the amount of precipitation and dissolution of the lithium metal is, the bigger the above problem becomes, however, in the secondary battery, insertion and extraction of lithium by the anode material capable of inserting and extracting lithium contributes a charge-discharge capacity, so in spite of a large battery capacity, the amount of precipitation and dissolution of the lithium metal is small. Fourthly, the conventional lithium secondary battery is quickly charged, the lithium metal is more nonuniformly precipitated, so the cycle characteristics are further degraded. However, in the secondary battery, in an initial charge, lithium is inserted into the anode material capable of inserting and extracting lithium, so the secondary battery can be quickly charged.

In order to more effectively obtain these advantages, for example, it is preferable that at the maximum voltage before the open circuit voltage becomes an overcharge voltage, the maximum capacity of precipitation of the lithium metal precipitated on the anode 22 is from 0.05 times to 3.0 times larger than the charge capacity of the anode material capable of inserting and extracting lithium. When the amount of precipitation of the lithium metal is too large, the same problem as the problem which occurs in the conventional lithium secondary battery arises, and when the amount is too small, the charge-discharge capacity cannot be sufficiently increased. Moreover, for example, the discharge capacity of the anode material capable of inserting and extracting lithium is preferably 150 mAh/g or over. The larger the ability to insert and extract lithium is, the smaller the amount of precipitation of the lithium metal relatively becomes. In addition, the charge capacity of the anode material is determined by the quantity of electricity when the battery with the anode made of the anode material as an anode active material and the lithium metal as a counter electrode is charged by a constant-current constant-voltage method until the potential of the anode reaches 0 V. For example, the discharge capacity of the anode material is determined by the quantity of electricity when the battery is subsequently discharged 10 hours or more by a constant-current method until the potential of the anode reaches 2.5 V.

The separator 23 is made of, for example, a porous film of a synthetic resin such as polytetrafluoroethylene, polypropylene, polyethylene or the like, or a porous film of ceramic, and the separator 23 may have a structure in which two or more kinds of the porous films are laminated. Among them, a porous film made of polyolefin is preferably used, because by use of the porous film, a short circuit can be effectively prevented, and the safety of the battery can be improved by a shutdown effect. More specifically, polyethylene can obtain a shutdown effect within a range of from 100°C to 160°C, and is superior in electrochemical stability, so polyethylene is preferably used as the material of the separator 23. Moreover, polypropylene is also preferably used, and any other resin having chemical stability can be used by copolymerizing or blending with polyethylene or polypropylene.

The porous film made of polyolefin is obtained through the following steps, for example. After a molten polyolefin composite is kneaded with a molten low-volatile solvent in liquid form to form a solution uniformly containing a high concentration of the polyolefin composite, the solution is extruded through a die, and is cooled to form a gel-form sheet, then the gel-form sheet is drawn to obtain the porous film.

As the low-volatile solvent, for example, a low-volatile aliphatic group such as nonane, decane, decaline, p-xylene, undecane, liquid paraffin or the like, or a cyclic hydrocarbon can be used. A composition ratio of the polyolefin composite and the low-volatile solvent is preferably 10 wt% to 80 wt% of the polyolefin composite, and more preferably 15 wt% to 70 wt% of the polyolefin composite, when the total ratio of the polyolefin composite and the low-volatile solvent is 100 wt%. When the composition ratio of the polyolefin composite is too small, during formation, swelling or neck-in becomes large at the exit of the die, so it is difficult to form the sheet. On the other hand, when the composition ratio of the polyolefin composite is too large, it is difficult to prepare a uniform solution.

When the solution containing a high concentration of the polyolefin composite is extruded through the die, in the case of a sheet die, a gap preferably has, for example, 0.1 mm to 5 mm. Moreover, it is preferable that an extrusion temperature is within a range of from 140°C to 250°C, and an extrusion speed is within a range of from 2 cm/minute to 30 cm/minute.

The solution is cooled to at least a gelling temperature or less. As a cooling method, a method of directly making the solution contact with cooling air, cooling water, or any other cooling medium, a method of making the solution contact with a roll cooled by a cooling medium or the like can be used. Moreover, the solution containing a high concentration of the polyolefin composite which is extruded from the die may be pulled before or during cooling at a pulling ratio of from 1 to 10, preferably from 1 to 5. It is not preferable to pull the solution at a too large pulling ratio, because neck-in becomes large, and a rupture tends to occur during drawing.

It is preferable that, for example, the gel-form sheet is heated, and then is biaxially drawn through a tenter process, a roll process, a rolling process, or a combination thereof. At this time, either simultaneous drawing in all direction or sequential drawing may be used, but simultaneous secondary drawing is preferable. The drawing temperature is preferably lower than a temperature of 10°C higher than the melting point of the polyolefin composite, and more preferably a crystal dispersion temperature or over and less than the melting point. A too high drawing temperature is not preferable, because effective molecular chain orientation by drawing cannot be achieved due to melting of the resin, and when the drawing temperature is too low, softening of the resin is insufficient, thereby a rupture of the gel-form sheet tends to occur during drawing, so the gel-form sheet cannot be drawn at a high enlargement ratio.

After drawing the gel-form sheet, the drawn film is preferably cleaned with a volatile solvent to remove the remaining low-volatile solvent. After cleaning, the drawn film is dried by heating or air blasting to volatilize the cleaning solvent. As the cleaning solvent, an easily volatile material, for example, a hydrocarbon such as pentane, hexane, heptane or the like, a chlorinated hydrocarbon such as methylene chloride, carbon tetrachloride or the like, a fluorocarbon such as trifluoroethane or the like, ether such as diethyl ether, dioxane or the like is used. The cleaning solvent is selected depending upon the used low-volatile solvent, and one kind selected from the cleaning solvents or a mixture thereof is used. A method of immersing in the volatile solvent to extract, a method of sprinkling the volatile solvent, or a combination thereof can be used for cleaning. Cleaning is performed until the remaining low-volatile solvent in the drawn film becomes less than 1 part by mass relative to 100 parts by mass of the polyolefin composite.

The separator 23 is impregnated with an electrolyte solution which is a liquid electrolyte. The electrolyte solution includes a liquid solvent, for example, a nonaqueous solvent such as an organic solvent or the like, and a lithium salt which is an electrolyte salt dissolved in the nonaqueous solvent. The liquid nonaqueous solvent is made of, for example, a nonaqueous compound with an intrinsic viscosity of 10.0 mPa·s or less at 25°C. As such a nonaqueous solvent, for example, one kind or a mixture of two or more kinds selected from materials typified by cyclic carbonate or chain carbonate is preferable.

More specifically, ethylene carbonate, propylene carbonate, butylene carbonate, vinylene carbonate, γ-butyrolactone, γ-valerolactone, 1,2-dimethoxyethane, tetrahydrofuran, 2-metyl tetrahydrofuran, 1,3-dioxolane, 4-methyl-1,3-dioxolane, methyl acetate, methyl propionate, ethyl propionate, dimethyl carbonate, ethyl methyl carbonate, diethyl carbonate, acetonitrile, glutaronitrile, adiponitrile, methoxyacetonitrile, 3-methoxypropylnitrile, N,N-dimetyl formamide, N-methyl pyrrolidinone, N-methyl oxazolidinone, N,N'-dimethylimidazolidinone, nitromethane, nitroethane, sulfolane, dimethyl sulfoxide, trimethyl phosphate, any of the above compounds in which a fluorine group is substituted for a part or all of a hydrogen group, or the like is cited. Specifically, in order to achieve superior charge-discharge capacity characteristics and charge-discharge cycle characteristics, at least one kind selected from the group consisting of ethylene carbonate, propylene carbonate, vinylene carbonate, dimethyl carbonate, ethyl methyl carbonate is preferably used.

The electrolyte salt includes one or more kinds of lithium salt represented by Chemical Formula 2 and one or more kinds of lithium salt except for that represented by Chemical Formula 2. Thereby, in the secondary battery, the chemical stability of the electrolyte can be improved, and a side reaction between the electrode and the electrolyte solution can be inhibited.

(Chemical Formula 2)

$$\text{LiN}(C_nF_{2n+1}SO_2)(C_mF_{2m+1}SO_2)$$

(where Li represents lithium, and N represents nitrogen, and each of n and m is an integer of 1 or greater.)

More specifically, as the lithium salt represented by Chemical Formula 2, $\text{LiN}(CF_3SO_2)_2$, $\text{LiN}(C_2F_5SO_2)_2$ or the like is cited. As lithium salt except for that represented by Chemical Formula 2, for example, $\text{LiPF}_6$, $\text{LiBF}_4$, $\text{LiAsF}_6$, $\text{LiClO}_4$, $\text{LiB}(C_6H_5)_4$, $\text{LiCH}_3SO_3$, $\text{LiCF}_3SO_3$, $\text{LiC}(SO_2CF_3)_3$, $\text{LiAlCl}_4$, $\text{LiSiF}_6$, LiCl or LiBr is cited. Among them, $\text{LiPF}_6$, $\text{LiBF}_4$, $\text{LiAsF}_6$ or $\text{LiClO}_4$ is preferable, because they have high ionic conductivity, and they are relatively stable. Further, $\text{LiPF}_6$ is more preferable.

The content (concentration) of the lithium salt represented by Chemical Formula 2 in the electrolyte salt is preferably within a range of from 1 wt% to 50 wt%. In other words, it is preferably within a range of 1 wt%≦ (the mass of the lithium salt represented by Chemical Formula 2/the mass of the whole electrolyte salt) ×100 ≦ 50 wt%. Within the range, the chemical stability of the electrolyte can be further improved, and superior cycle characteristics can be obtained. The content of the electrolyte salt is preferably 3.0 mol/kg or less in a solvent, and more preferably 0.5 mol/kg or over in the solvent, because the ionic conductivity of the electrolyte solution can be increased within the range.

Moreover, instead of the electrolyte solution, a gel electrolyte in which a host high molecular weight compound holds an electrolyte solution may be used. Any gel electrode having an ionic conductivity of 1 mS/cm or over at room temperature may be used, and the composition of the gel electrode and the structure of the host high molecular weight compound are not specifically limited. The electrolyte solution (that is, the liquid solvent and the electrolyte salt) is as described above. As the host high molecular weight compound, for example, polyacrylonitrile, polyvinylidene fluoride, a copolymer of polyvinylidene fluoride and polyhexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene or polycarbonate is cited. Specifically, in point of electrochemical stability, a high molecular weight compound having the structure of polyacrylonitrile, polyvinylidene fluoride, polyhexafluoropropylene or polyethylene oxide is preferably used. An amount of the added host high molecular weight compound relative to the electrolyte solution varies depending upon compatibility between them, however, in general, an amount of the host high molecular weight compound equivalent to 5 wt% to 50 wt% of the electrolyte solution is preferably added.

Moreover, the concentration of the electrolyte salt in the solvent is preferably 3.0 mol/kg or less, and more preferably 0.5 mol/kg or over. Herein, the solvent widely means not only a liquid solvent but also a material capable of dissociating the electrolyte salt and having ionic conductivity. Therefore, when a high molecular weight compound with ionic conductivity is used as the host high molecular weight compound, the host high molecular weight compound is considered as a solvent.

The secondary battery can be manufactured through the following steps, for example.

At first, for example; a cathode material capable of inserting and extracting lithium, an electronic conductor, and a binder are mixed to prepare a cathode mixture, and the cathode mixture is dispersed in a solvent such as N-methyl-2-pyrrolidone or the like to produce a cathode mixture slurry in paste form. After the cathode mixture slurry is applied to the cathode current collector 21a, and the solvent is dried, the cathode mixed layer 21b is formed through compression molding by a roller press or the like so as to form the cathode 21.

Next, for example, an anode material capable of inserting and extracting lithium and a binder are mixed to prepare an anode mixture, then the anode mixture is dispersed in a solvent such as N-methyl-2-pyrrolidone or the like to produce an anode mixture slurry in paste form. After the anode mixture slurry is applied to the anode current collector 22a, and the solvent is dried, the anode mixed layer 22b is formed through compression molding by a roller press or the like so as to form the anode 22.

Then, the cathode lead 25 is attached to the cathode current collector 21a by welding or the like, and the anode lead 26 is attached to the anode current collector 22a by welding or the like. After that, for example, a laminate including the cathode 21 and anode 22 with the separator 23 in between is spirally wound, and an end portion of the cathode lead 25 is welded to the safety valve mechanism 15, and an end portion of the anode lead 26 is welded to the battery can 11. Then, the spirally wound laminate including the cathode 21 and the anode 22 sandwiched between a pair of insulating plates 12 and 13 is contained in the battery can 11. After the spirally wound laminate including the cathode 21 and the anode 22 is contained in the battery can 11, the electrolyte is injected into the battery can 11, and the separator 23 is impregnated with the electrolyte. After that, the battery cover 14, the safety valve mechanism 15 and the PTC device 16 are fixed in an opening end portion of the battery can 11 through caulking by the gasket 17. Thereby, the secondary battery shown in FIG. 1 is formed.

The secondary battery works as follows.

In the secondary battery, when charge is carried out, lithium ions are extracted from the cathode mixed layer 21b, and are inserted into the anode material capable of inserting and extracting lithium included in the anode mixed layer 22b through the electrolyte with which the separator 23 is impregnated. When the charge further continues, in a state where the open circuit voltage is lower than the overcharge voltage, the charge capacity exceeds the charge capacity of the anode material capable of inserting and extracting lithium, and then lithium metal begins to be precipitated on the surface of the anode material capable of inserting and extracting lithium. After that, until the charge is completed, precipitation of lithium metal on the anode 22 continues. Thereby, for example, when a carbon material is used as the anode material capable of inserting and extracting lithium, the color of the surface of the anode mixed layer 22b changes from black to gold, and then to silver.

Next, when discharge is carried out, at first, the lithium metal precipitated on the anode 22 is eluted as ions, and is inserted into the cathode mixed layer 21b through the electrolyte with which the separator 23 is impregnated. When the discharge further continues, lithium ions inserted into the anode material capable of inserting and extracting lithium in the anode mixed layer 22b are extracted, and are inserted into the cathode mixed layer 21b through the electrolyte solution. Therefore, in the secondary battery, the characteristics of the conventional lithium secondary battery and the lithium-ion secondary battery, that is, a higher energy density and superior charge-discharge cycle characteristics can be obtained.

Specifically, in the embodiment, the electrolyte includes the lithium salt represented by Chemical Formula 2 and the lithium salt except for that represented by Chemical Formula 2, so the chemical stability of the electrolyte is improved, and a side reaction is inhibited, thereby battery characteristics such as charge capacity, charge-discharge cycle characteristics or the like are improved.

Thus, according to the embodiment, the electrolyte includes the lithium salt represented by Chemical Formula 2 and the lithium salt except for that represented by Chemical Formula 2, so the chemical stability of the electrolyte can be improved, and a side reaction can be inhibited. Thereby, battery characteristics such as charge capacity, charge-discharge cycle characteristics or the like can be improved.

Next, specific examples of the invention will be described in more detail below.

(Examples 1 through 5)

As in the case of the secondary battery shown in FIGs. 1 and 2, a jelly roll type secondary batteries of Examples 1 through 5 were manufactured through the following steps. Hereinafter, the description will be given referring to FIGs. 1 and 2, and like components are donated by like numerals as of FIGs. 1 and 2.

At first, lithium carbonate ($Li_2CO_3$) and cobalt carbonate ($CoCO_3$) were mixed at a ratio (molar ratio) of $Li_2CO_3$:$CoCO_3$=0.5:1, and the mixture was fired in air at 900°C for 5 hours to obtain lihtium·cobalt complex oxide ($LiCoO_2$) as a cathode material. Next, 91 parts by weight of the lithium·cobalt complex oxide, 6 parts by weight of graphite as a electronic conductor and 3 part by weight of polyvinylidene fluoride as a binder were mixed to prepare a cathode mixture. Then, the cathode mixture was dispersed in N-methyl-2-pyrrolidone as a solvent to produce cathode mixture slurry. After the cathode mixture slurry was uniformly applied to both sides of the cathode current collector 21a made of strip-shaped aluminum foil with a thickness of 20 μm, and was dried, the cathode mixed layer 21b was formed through compression molding by a roller press so as to form the cathode 21 with a thickness of 174 μm. After that, the cathode lead 25 made of aluminum was attached to an end of the cathode current collector 21a.

Moreover, granular artificial graphite powder with the spacing of the (002) planes of 0.3358 nm was prepared as an anode material, and 90 parts by weight of the granular artificial graphite powder and 10 parts by weight of polyvinylidene fluoride as a binder were mixed to prepare a anode mixture. Next, the anode mixture was dispersed in N-methyl-2-pyrrolidone as a solvent to produce anode mixture slurry. After the anode mixture slurry was uniformly applied to both sides of the anode current collector 22a made of a strip-shaped copper foil with a thickness of 10 μm, and was dried, the anode mixed layer 22b was formed through compression molding by the roller press to form the anode 22 with a thickness of 130 μm. Then, the anode lead 26 made of nickel was attached to an end of the anode current collector 22a.

After the cathode 21 and the anode 22 were formed, the separator 23 made of a microporous polypropylene film with a thickness of 25 μm was prepared, the anode 22, the separator 23, the cathode 21 and the separator 23 were laminated in order to form a laminate, and the laminate was spirally wound many times to form the spirally wound electrode body 20.

After the spirally wound electrode body 20 was formed, the spirally wound electrode body 20 was sandwiched between a pair of insulating plates 12 and 13, and the anode lead 26 was welded to the battery can 11, and the cathode lead 25 was welded to the safety valve mechanism 15. Then the spirally wound electrode body 20 was contained in the battery can 11 made of nickel-plated iron. After that, the electrolyte solution was injected into the battery can 11 by a decompression system.

As the electrolyte solution, a mixed solvent containing 35 wt% of ethylene carbonate, 50 wt% of dimethyl carbonate and 15 wt% of ethyl methyl carbonate in which $LiN(CF_3SO_2)_2$ as a first electrolyte salt and $LiPF_6$ as a second electrolyte salt were dissolved was used. The first electrolyte salt was a lithium salt represented by Chemical Formula 2, and the second electrolyte salt was a lithium salt except for that represented by Chemical Formula 2. At that time, the content of the electrolyte salt, that is, the total content of the first electrolyte salt $LiN(CF_3SO_2)_2$ and the second electrolyte salt $LiPF_6$ in a solvent was 1.2 mol/kg, and the content of the first electrolyte salt $LiN(CF_3SO_2)_2$ in the electrolyte salt in Examples 1 through 5 was varied as shown in Table 1.

After the electrolyte solution was injected into the battery can 11, the battery cover 14 was caulked into the battery can 11 by the gasket 17 whose surface was coated with asphalt so as to obtain the jelly roll type secondary batteries of Examples 1 through 5 with a diameter of 14 mm and a height of 65 mm.

A charge-discharge test was carried out on the obtained secondary batteries of Examples 1 through 5 at 23°C to determine their rated discharge capacity and their discharge capacity retention ratio. At that time, after charge was carried out at a constant current of 400 mA until the battery voltage reached 4.2 V, the charge was carried out at a constant voltage of 4.2 V until the total charge time reached 4 hours. The voltage between the cathode 21 and the anode 22 just before the end of the charge was 4.2 V, and the current was 5 mA or less. On the other hand, discharge was carried out at a constant current of 400 mA until the battery voltage reached 2.75 V. When charge and discharge were carried out under the above-described conditions, the batteries reached a full charge condition and a full discharge condition. Moreover, the rated discharge capacity was a discharge capacity in the second cycle, and the discharge capacity retention ratio was determined as a ratio of a discharge capacity in the 200th cycle to a discharge capacity in the second cycle, that is, (the discharge capacity in the 200th cycle/the discharge capacity in the second cycle)×100. The obtained results are shown in Table 1.

Moreover, the secondary batteries of Examples 1 through 5 which were fully charged again after the first cycle of charge and discharge was carried out under the above-described conditions were disassembled to check whether the lithium metal was precipitated on the anode mixed layer 22b by a visual inspection and a $^7$Li nuclear magnetic resonance spectroscopy. Further, after the second cycle of charge and discharge was carried out under the above-described conditions to fully discharge the batteries, the batteries were disassembled to check whether the lithium metal was precipitated on the anode mixed layer 22b in a like manner. The results are also shown in Table 1.

As Comparative Examples 1 and 2 relative to Examples, secondary batteries were formed as in the case of Examples, except that only the second electrolyte salt LiPF6 or only the first electrolyte salt $LiN(CF_3SO_2)_2$ was used as the electrolyte salt. At that time, the content of the second electrolyte salt $LiPF_6$ or the first electrolyte salt $LiN(CF_3SO_2)_2$ in the solvent was 1.2 mol/kg.

Furhter, as Comparative Examples 3 and 4 relative to Examples, the secondary batteries were formed as in the case of Examples, except that the thickness of the anode mixed layer was increased, thereby the anode had a thickness of 180 μm, and the amount of the anode material capable of inserting and extracting lithium was increased so as not to precipitate the lithium metal during charge. At that time, in Comparative Example 3, only the second electrolyte salt $LiPF_6$ was used as the electrolyte salt, and the content thereof in the solvent was 1.2 mol/kg. In Comparative Example 4, the first electrolyte salt $LiN(CF_3SO_2)_2$ and the second electrolyte salt $LiPF_6$ were used as the electrolyte salt, and the contents thereof were the same as those in Example 1.

The charge-discharge test was also carried out on the secondary batteries of Comparative Examples 1 through 4 as in the case of Examples 1 through 5 to check their rated discharge capacity, their discharge capacity retention ratio and the presence or absence of precipitated lithium metal in a full charge condition and in a full discharge condition. The obtained results are shown in Table 1.

As shown in Table 1, in Examples 1 through 5 and Comparative Examples 1 and 2, in a full charge condition, silver precipitation on the anode mixed layer 22b was observed, and a peak attributed to the lithium metal was obtained by the $^7$Li nuclear magnetic resonance spectroscopy. In other words, the precipitation of the lithium metal was confirmed. Moreover, in a full charge condition, a peak attributed to lithium ions was obtained by the $^7$Li nuclear magnetic resonance spectroscopy, thereby it was confirmed that lithium ions were inserted between graphite layers in the anode mixed layer 22b. On the other hand, in a full discharge condition, the color of the anode mixed layer 22b was black, so no silver precipitation was observed, and no peak attributed to the lithium metal was observed by the $^7$Li nuclear magnetic resonance spectroscopy. Further, a peak attributed to lithium ions was slightly observed. In other words, it was confirmed that the capacity of the anode 22 was represented by the sum of a capacity component by insertion and extraction of the lithium metal and a capacity component by precipitation and dissolution of lithium.

On the other hand, in Comparative Examples 3 and 4, in a full charge condition, no silver precipitation was observed, and the color of the anode mixed layer 22b was gold. Further, no peak attributed to the lithium metal was observed by the $^7$Li nuclear magnetic resonance spectroscopy, and only a peak attributed to lithium ions was obtained. On the other hand, in a full discharge condition, the color of the anode mixed layer 22b was black, and no peak attributed to the lithium metal was observed by the $^7$Li nuclear magnetic resonance spectroscopy, and a peak attributed to lithium ions was slightly observed. In other words, it was confirmed that the capacity of the anode was represented by a capacity by insertion and extraction of lithium, so the secondary batteries of Comparative Examples 3 and 4 were conventional lithium-ion secondary batteries.

Moreover, as shown in Table 1, in the secondary batteries of Examples 1 through 5 which included the first electrolyte salt $LiN(CF_3SO_2)_2$ and the second electrolyte salt $LiPF_6$, the rated discharge capacity was increased to some extent, and discharge capacity retention ratio was significantly superior, compared to the secondary batteries of Comparative Examples 1 and 2 which included only either of the electrolyte salts. On the other hand, in the secondary batteries of Comparative Examples 3 and 4 which were lithium-ion secondary batteries, the rated discharge capacity and the discharge capacity retention ratio in the secondary battery of Comparative Example 3 which did not include the first electrolyte salt $LiN(CF_3SO_2)_2$ was much the same as those in the secondary battery of Comparative Example 4 which included the first electrolyte salt $LiN(CF_3SO_2)_2$.

In other words, it was found out that when the first electrolyte salt $LiN(CF_3SO_2)_2$ and the second electrolyte salt $LiPF_6$ were used as the electrolyte salt, the discharge capacity and the charge-discharge cycle characteristics could be improved, and specifically in the secondary battery in which the capacity of the anode 22 was represented by the sum of the capacity component by insertion and extraction of light metal and the capacity component by precipitation and dissolution of light metal, higher effects could be obtained.

Moreover, as the results of Examples 1 through 5, there was tendency that as the content of the first electrolyte salt $LiN(CF_3SO_2)_2$ was increased, the rated discharge capacity and the discharge capacity retention ratio became larger, and then after they reached maximum values, they became smaller. In other words, it was found out that the content of the first electrolyte salt $LiN(CF_3SO_2)_2$ in the electrolyte salt was within a range of from 1 wt% to 50 wt%, higher effects could be obtained.

(Examples 6 through 9)

The secondary batteries of Examples 6 through 9 were formed as in the case of Example 1, except that the first electrolyte salt or the second electrolyte salt was varied as shown in Table 2. Further, as Comparative Example 5 relative to Example 9, the secondary battery was formed as in the case of Example 9, except that the thickness of the anode mixed layer 22b was increased so that the anode 22 had a thickness of 180 $\mu$m, thereby the lithium metal is prevented from being precipitated during charge.

The charge-discharge test was carried out on Examples 6 through 9 and Comparative Example 5 as in the case Example 1 to check their rated discharge capacity, their discharge capacity retention ratio and the presence or absence of precipitation of the lithium metal. The obtained results are shown in Table 2 together with the results of Example 1 and Comparative Examples 1 through 4.

As shown in Table 2, in Examples 6 through 9, higher values of the rated discharge capacity and the discharge capacity retention ratio were obtained as in the case of Example 1. In other words, it was found out that the lithium salt represented by the above Chemical Formula 2 and the lithium salt except for that represented by Chemical Formula 2 were included, superior discharge capacity and superior charge-discharge cycle characteristics could be obtained.

In the above Examples, some specific examples of the lithium salts are described. It is considered that the above-described effects result from the molecular structures of the first electrolyte salt $LiN(CF_3SO_2)_2$ or $LiN(C_2F_5SO_2)_2$. Therefore, even if any other lithium salt represented by Chemical Formula 2 is used as the first electrolyte salt, or even if any other lithium salt except for that represented by Chemical Formula 2 is used as the second electrolyte salt, the same effects can be obtained.

Although the present invention is described referring to the embodiments and the examples, the invention is not limited to the embodiments and the examples, and can be variously modified. For example, in the embodiments and the examples, the case where lithium is used as the light metal is described, however, the invention is applicable to the case where any other alkali metal such as sodium (Na), potassium (K) or the like, alkali-earth metal such as magnesium (Mg) calcium (Ca) or the like, any other light metal such as aluminum or the like, lithium, or an alloy thereof is used, and the same effects can be obtained.

At this time, the anode material capable of inserting and extracting light metal, the cathode material, the nonaqueous solvent, the electrolyte salt or the like is selected depending upon the light metal. For example, a light metal salt corresponding to the light metal is used for the electrolyte salt. In other words, the lithium salt represented by Chemical Formula 2 can be generalized by a light metal salt represented by Chemical Formula 3 below.

(Chemical Formula 3)

$$MN(C_nF_{2n+1}SO_2)(C_mF_{2m+1}SO_2)$$

(where M represents light metal, N represents nitrogen, and each of n and m is an integer of 1 or greater.)

However, lithium or an alloy including lithium is preferably used as the light metal, because the voltage compatibility with the lithium-ion secondary battery which is practically used at present is high. Moreover, when the alloy including lithium is used as the light metal, a material capable of forming an alloy with lithium may be present in the electrolyte so as to form the alloy during precipitation, or a material capable of forming an alloy with lithium may be present in the anode so as to form the alloy during precipitation.

Moreover, although, in the above embodiments and the examples, the case where the electrolyte solution or the gel electrolyte which is a kind of solid electrolyte is used is described, any other electrolyte may be used. As the other electrode, for example, an organic solid electrolyte in which an electrolyte salt is dispersed in a high molecular weight compound having ionic conductivity, an inorganic solid electrolyte made of ion-conductive ceramic, ion-conductive glass, ionic crystal or the like, a mixture of the inorganic solid electrolyte and an electrolyte solution, a mixture of the inorganic solid electrolyte and the gel electrolyte, or a mixture of the inorganic solid electrolyte and the organic solid electrolyte is cited.

Further, in the above embodiment and the examples, the jelly roll type secondary battery with a spirally wound structure is described, however, the invention is applicable to an elliptic shaped or a polygonal shaped secondary battery with a spirally wound structure, or a secondary battery with a structure in which the cathode and anode are folded or laminated in a like manner. In addition, the invention is applicable to a secondary battery with a coin shape, a button shape; a card shape or the like. Further, the invention is applicable to not only the secondary batteries but also primary batteries.

As described above, in the battery according to the invention, the electrolyte includes the light metal salt represented by Chemical Formula 1 and the light metal salt except for that represented by Chemical Formula 1, so the chemical stability of the electrolyte can be improved, and battery characteristics such as the discharge capacity, the charge-discharge cycle characteristics or the like can be improved.

Obviously many modifications and variations of the present invention are possible in the light of the above teachings. It is therefore to be understood that within the scope of the appended claims the invention may be practiced otherwise than as specifically described.

(Table 1)

| | FIRST ELECTROLYTE SALT | CONTENT OF FIRST | RATED DISCHARGE | DISCHARGE CAPACITY CAPACITY | PRECIPITATION OF OF METAL | |
|---|---|---|---|---|---|---|
| | SECOND ELECTROLYTE SALT | ELECTROLYTE SALT (wt%) | CAPACITY (mAh) | RETENTION (%) | FULL CHARGE | FULL DISCHARGE |
| EXAMPLE 1 | $LiN(CF_3SO_2)_2$ $LiPF_6$ | 10 | 1112 | 85.0 | PRESENT | ABSENT |
| EXAMPLE 2 | $LiN(CF_3SO_2)_2$ $LiPF_6$ | 30 | 1113 | 85.1 | PRESENT | ABSENT |
| EXAMPLE 3 | $LiN(CF_3SO_2)_2$ $LiPF_6$ | 50 | 1110 | 84.8 | PRESENT | ABSENT |
| EXAMPLE 4 | $LiN(CF_3SO_2)_2$ $LiPF_6$ | 5 | 1111 | 84.9 | PRESENT | ABSENT |
| EXAMPLE 5 | $LiN(CF_3SO_2)_2$ $LiPF_6$ | 1 | 1108 | 83.7 | PRESENT | ABSENT |
| COMPARATIVE EXAMPLE 1 | NOT INCLUDED $LiPF_6$ | 0 | 1100 | 72.0 | PRESENT | ABSENT |
| COMPARATIVE EXAMPLE 2 | $LiN(CF_3SO_2)_2$ NOT INCLUDED | 100 | 1100 | 71.6 | PRESENT | ABSENT |
| COMPARATIVE EXAMPLE 3 | NOT INCLUDED $LiPF_6$ | 0 | 880 | 85.5 | ABSENT | ABSENT |
| COMPARATIVE EXAMPLE 4 | $LiN(CF_3SO_2)_2$ $LiPF_6$ | 10 | 881 | 85.5 | ABSENT | ABSENT |

EP 1 369 951 A1

(Table 2)

| | FIRST ELECTROLYTE ELECTROLYTE SALT | CONTENT CONTENT OF FIRST | RATED DISCHARGE | DISCHARGE CAPACITY RETENTION | PRECIPITATION OF PRECIPITATION OF Li METAL | |
|---|---|---|---|---|---|---|
| | SECOND SECOND SALT | FIRST ELECTROLYTE SALT (wt%) | DISCRARGE CAPACITY (mAh) | RATIO (%) | FULL CHARGE | FULL DISCHARGE |
| EXAMPLE 1 | $LiN(CF_3SO_2)_2$ $LiPF_6$ | 10 | 1112 | 85.0 | PRESENT | ABSENT |
| EXAMPLE 6 | $LiN(CF_3SO_2)_2$ $LiClO_4$ | 10 | 1109 | 82.5 | PRESENT | ABSENT |
| EXAMPLE 7 | $LiN(CF_3SO_2)_2$ $LiBF_4$ | 10 | 1106 | 83.0 | PRESENT | ABSENT |
| EXAMPLES 8 | $LiN(CF_3SO_2)_2$ $LiA_sF_6$ | 10 | 1111 | 84.6 | PRESENT | ABSENT |
| EXAMPLE 9 | $LiN(C_2F_5SO_2)_2$ $LiPF_6$ | 10 | 1111 | 84.8 | PRESENT | ABSENT |
| COMPARATIVE EXAMPLE 1 | NOT INCLUDED $LiPF_6$ | 0 | 1100 | 72.0 | PRESENT | ABSENT |
| COMPARATIVE EXAMPLE 2 | $LiN(CF_3SO_2)_2$ NOT INCLUDED | 100 | 1100 | 71.6 | PRESENT | ABSENT |
| COMPARATIVE EXAMPLE 3 | NOT INCLUDED $LiPF_6$ | 0 | 880 | 85.5 | ABSENT | ABSENT |
| COMPARATIVE EXAMPLE 4 | $LiN(CF_3SO_2)_2$ $LiPF_6$ | 10 | 881 | 85.5 | ABSENT | ABSENT |
| COMPARATIVE EXAMPLE 5 | $LiN(C_2F_5O_2)_2$ | 10 | 877 | 85 | ABSENT | ABSENT |

**Claims**

1. A battery, comprising:

   a cathode;
   an anode; and
   an electrolyte,

   wherein the capacity of the anode is represented by the sum of a capacity component by insertion and extraction of light metal and a capacity component by precipitation and dissolution of the light metal, and
   the electrolyte contains an electrolyte salt including one or more kinds of light metal salt represented by Chemical Formula 4 and one or more kinds of light metal salt except for the light metal salt represented by Chemical Formula 4.

   (Chemical Formula 4)

   $$MN(C_nF_{2n+1}SO_2)(C_mF_{2m+1}SO_2)$$

   (where M represents light metal, N represents nitrogen, and each of n and m is an integer of 1 or greater.)

2. A battery according to claim 1, wherein
   the content of the light metal salt represented by Chemical Formula 4 in the electrolyte salt is within a range of from 1 wt% to 50 wt%.

3. A battery according to claim 1, wherein
   anions in the light metal salt except for the light metal salt represented by Chemical Formula 4 are at least one kind selected from the group consisting of $PF_6^-$, $BF_4^-$, $AsF_6^-$ and $ClO_4^-$.

4. A battery according to claim 1, wherein
   the anode includes an anode material capable of inserting and extracting the light metal.

5. A battery according to claim 4, wherein
   the anode includes a carbon material.

6. A battery according to claim 5, wherein
   the anode includes at least one kind selected from the group consisting of graphite, graphitizing carbon and non-graphitizable carbon.

7. A battery according to claim 6, wherein
   the anode includes graphite.

8. A battery according to claim 4, wherein
   the anode includes at least one kind selected from the group consisting of a metal capable of forming an alloy or a compound with the light metal, a semiconductor capable of forming an alloy or a compound with the light metal, an alloy of the metal or the semiconductor, and an compound of the metal or the semiconductor.

9. A battery according to claim 8, wherein
   the anode includes at least one kind selected from the group consisting of tin (Sn), lead (Pb), aluminum (Al), indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), hafnium (Hf), zirconium (Zr) and yttrium (Y), an alloy thereof, and a compound thereof.

10. A battery according to claim 1, wherein
    the light metal includes lithium (Li).

11. A battery according to claim 10, wherein
    $LiN(CF_3SO_2)_2$ is included as the light metal salt represented by Chemical Formula 4.

**12.** A battery according to claim 10, wherein
$LiN(C_2F_5SO_2)_2$ is included as the light metal salt represented by Chemical Formula 4.

**13.** A battery according to claim 10, wherein
$LiPF_6$ is included as the light metal salt except for the light metal salt represented by Chemical Formula 4.

FIG. 1

FIG. 2

## INTERNATIONAL SEARCH REPORT

| International application No. |
|---|
| PCT/JP02/02409 |

A. CLASSIFICATION OF SUBJECT MATTER
    Int.Cl⁷ H01M10/40, 4/58, 4/38, 4/02

According to International Patent Classification (IPC) or to both national classification and IPC

B. FIELDS SEARCHED

Minimum documentation searched (classification system followed by classification symbols)
    Int.Cl⁷ H01M10/40, 4/58, 4/38, 4/02

Documentation searched other than minimum documentation to the extent that such documents are included in the fields searched
| Jitsuyo Shinan Koho | 1926–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-354155 A  (Japan Storage Battery Co., Ltd.), 24 December, 1999 (24.12.99), Claims 1 to 3; Par. Nos. [0009], [0014], [0031], [0034]; examples (Family: none) | 1 |
| X | JP 11-354154 A  (Japan Storage Battery Co., Ltd.), 24 December, 1999 (24.12.99), Claims 1 to 3; Par. Nos. [0010], [0013], [0033], [0036]; examples (Family: none) | 1 |
| X | JP 11-354153 A  (Japan Storage Battery Co., Ltd.), 24 December, 1999 (24.12.99), Claims 1, 2; Par. Nos. [0009], [0013], [0030], [0033]; examples (Family: none) | 1 |

| ☒ Further documents are listed in the continuation of Box C. | ☐ See patent family annex. |

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 May, 2002 (21.05.02) | 04 June, 2002 (04.06.02) |

| Name and mailing address of the ISA/ Japanese Patent Office | Authorized officer |
|---|---|
| Facsimile No. | Telephone No. |

Form PCT/ISA/210 (second sheet) (July 1998)

**EP 1 369 951 A1**

## INTERNATIONAL SEARCH REPORT

| | International application No. |
|---|---|
| | PCT/JP02/02409 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 8-64237 A (Sanyo Electric Co., Ltd.),<br>08 March, 1996 (08.03.96),<br>Claims 1 to 3; Par. Nos. [0006], [0011]; examples<br>(Family: none) | 1 |
| X | JP 5-326016 A (Sanyo Electric Co., Ltd.),<br>10 December, 1993 (10.12.93),<br>Claim 1; Par. Nos. [0008] to [0013]<br>(Family: none) | 1 |
| X | JP 5-74491 A (Sanyo Electric Co., Ltd.),<br>26 March, 1993 (26.03.93),<br>Claim 1; Par. Nos. [0006], [0009], [0011],<br>[0012], [0030] to [0034]<br>(Family: none) | 1 |
| P,X | JP 2002-33119 A (Matsushita Electric Industrial Co.,<br>Ltd.),<br>31 January, 2002 (31.01.02),<br>Claim 6; Par. Nos. [0026] to [0032], [0060];<br>examples<br>(Family: none) | 1 |
| P,X | JP 2002-33117 A (Matsushita Electric Industrial Co.,<br>Ltd.),<br>31 January, 2002 (31.01.02),<br>Claim 5; Par. Nos. [0014] to [0020], [0029], [0030];<br>examples<br>(Family: none) | 1 |
| P,X | JP 2001-236990 A (Sony Corp.),<br>31 August, 2001 (31.08.01),<br>Claims 1 to 5; Par. Nos. [0015], [0016], [0030],<br>[0031], [0035]; examples<br>(Family: none) | 1 |

Form PCT/ISA/210 (continuation of second sheet) (July 1998)

## INTERNATIONAL SEARCH REPORT

| International application No. |
| --- |
| PCT/JP02/02409 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:
   (See extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1

**Remark on Protest**    ☐ The additional search fees were accompanied by the applicant's protest.

☐ No protest accompanied the payment of additional search fees.

Form PCT/ISA/210 (continuation of first sheet (1)) (July 1998)

21

| INTERNATIONAL SEARCH REPORT | International application No. |
|---|---|
| | PCT/JP02/02409 |

Continuation of Box No. II of continuation of first sheet(1)

For a group of inventions to fulfill the requirement of unity of invention, there must exist special technical features for linking the group of inventions so as to form a single general inventive concept, whereas a group of inventions described in claims 1-13 pertain to a battery comprising an anode and a cathode, both provided with an electrolyte, and are linked only in terms of the technical matters enclosed in parentheses of a battery characterized in that
[the capacity of the cathode is expressed by a sum of a capacity component by light metal
occlusion/desorption and a capacity component by light metal deposition/dissolution, and
the above electrolyte contains a electrolyte salt containing at least one kind of light metal salt expressed by
chemical formula 4 (description of formula 4 omitted) and at least one kind of light metal salt by other than
chemical formula 4].
The study of the technical matters enclosed in parentheses provides in a first stage as one constitution of the technical features that the capacity of the cathode is represented by a sum of a capacity component by light metal occlusion/desorption and a capacity component by light metal deposition/dissolution; however, the constitution is calculated simply by a sum and is represented by summarization including one of the phenomena . In a lithium secondary battery, it is self-evident that either lithium ions are stored in or released from an electrode as they are, or deposition/dissolution is conducted between metal and ions, and therefore the cathode capacity represented by the sum is not considered to indicate any special technical constitution ( moreover, even if carboneous material, for example, is used as a cathode active material, metal deposition involving a dendrite growth is well known). Accordingly, the fact that [the capacity of the cathode is expressed by a sum of a capacity component by light metal occlusion/desorption and a capacity component by light metal deposition/dissolution] itself indicates no technical feature in the field of a lithium secondary battery (note that both phenomena are not necessarily occurring positively).
Next, the matter in the second stage that [the above electrolyte contains a electrolyte salt containing at least one kind of light metal salt expressed by chemical formula 4 (description of formula 4 omitted) and at least one kind of light metal salt by other than chemical formula 4] is described in the following respective documents and therefore does not constitute any special technical matter:
*Document 1...JP 11-354155 A (Japan Storage Battery Co., Ltd.) 1999. 12.24
*Document 2...JP 11-354154 A (Japan Storage Battery Co., Ltd.) 1999. 12.24
*Document 3...JP 11-354153 A (Japan Storage Battery Co., Ltd.) 1999. 12.24
*Document 4...JP 8-64237 A (Sanyo Electric Co., Ltd.) 1996. 03. 08
*Document 5...JP 5-326016 A (Sanyo Electric Co., Ltd.) 1993. 12.10
*Document 6...JP 5-74491 A (Sanyo Electric Co., Ltd.) 1993. 03. 26.
Therefore, there exist among a group of inventions described in claims 1-13 no special technical features for linking them so as to form a single general inventive concept. Accordingly, the group of inventions described in claims 1-13 do not clearly fulfill the requirement of unity of invention.
Next, the number of inventions, that is, the number of inventions described in the claims of this international application and liked so as to form a general inventive concept will be studied.

Form PCT/ISA/210 (extra sheet) (July 1998)

## INTERNATIONAL SEARCH REPORT

| International application No. |
| --- |
| PCT/JP02/02409 |

Continuation of Box No. II of continuation of first sheet(1)

The invention in claim 1 is as described above and is described in documents 1-6, and therefore is known. (Invention 1)

The invention in claim 2 citing claim 1 specifies the contents of light metal salt represented by chemical formula 4, and documents 1-6 respectively describe the scopes satisfying the condition in claim 2, and therefore this invention is known. (Invention 2)

The invention in claim 3 citing claim 1 specifies anions of light metal salt other than light metals represented by chemical formula 4, and documents 1-6 respectively describe the scopes satisfying the condition in claim 3, and therefore this invention is known. (Invention 3)

The invention in claim 4 citing claim 1 specifies that cathode material uses a material capable of occluding and desorbing light metal, and documents 1-6 respectively describe a carbon material, light metal or a light metal alloy material, and therefore this invention is known. (Invention 4)

In addition, cathode materials described in claim 5 citing claim 4, claim 6 citing claim 5, and claim 7 citing claim 6 are satisfied by documents 1-6, and cathode materials described in claim 8 citing claim 4 and claim 9 citing claim 8 are satisfied by documents 1-6; therefore inventions in the above claims are known. (Inventions 5-9)

The invention in claim 10 citing claim 1 specifies the inclusion of Li as light metal, and documents 1-6 respectively describe this, and therefore this invention is known. (Invention 10)

The use of trifluoromethane sufonic acid imide lithium specified in claim 11 directly citing claim 10 is described in documents 1-6, the use of pentafluoroethene sulfonic acid imide lithium specified in claim 12 is described in documents 1-6, 3, and the use of hexafluoro lithium phosphate specified in claim 13 is describe in documents 1-6, and therefore these inventions are known. (Inventions 11-13)

Consequently, inventions in claims 1-13 are all known and there exist no "special technical features among the inventions for linking them so as to forma a single and general inventive concept", therefore it is considered that 13 invention not linked by special technical features are described.